(19) Europäisches Patentamt
European Patent Office
Office européen des brevets

(11) **EP 1 956 062 A1**

(12) **EUROPEAN PATENT APPLICATION**
published in accordance with Art. 158(3) EPC

(43) Date of publication:
**13.08.2008 Bulletin 2008/33**

(21) Application number: **06822100.1**

(22) Date of filing: **24.10.2006**

(51) Int Cl.:
*C09D 201/00* (2006.01)    *B82B 1/00* (2006.01)
*C01B 31/02* (2006.01)    *C09D 5/00* (2006.01)
*C09D 5/24* (2006.01)    *C09D 11/10* (2006.01)
*D01F 9/127* (2006.01)    *H01B 1/24* (2006.01)

(86) International application number:
**PCT/JP2006/321120**

(87) International publication number:
**WO 2007/049588 (03.05.2007 Gazette 2007/18)**

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **25.10.2005 JP 2005310302**

(71) Applicants:
• **Bussan Nanotech Research Institute Inc.**
**Tokyo 100-0004 (JP)**
• **MITSUI & CO., LTD.**
**Tokyo 100-0004 (JP)**

(72) Inventors:
• **HANDA, Koichi**
**Tokyo 100-0004 (JP)**

• **Subiantoro**
**Tokyo 100-0004 (JP)**
• **TSUKADA, Takayuki**
**Tokyo 100-0004 (JP)**
• **OKUBO, Tsuyoshi**
**Tokyo 100-0004 (JP)**
• **SHAN, Jiayi**
**Tokyo 100-0004 (JP)**
• **YAMAUCHI, Akira**
**Tokyo 100-0004 (JP)**
• **NAGASHIMA, Manabu**
**Tokyo 100-0004 (JP)**

(74) Representative: **Brykman, Georges et al**
**Osha Liang**
**121, Avenue des Champs Élysées**
**75008 Paris (FR)**

(54) **CONDUCTIVE COATING MATERIAL**

(57)      The disclosed is a conductive coating material which includes an organic binder component and carbon fibrous structures, wherein the carbon fibrous structure comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers; and wherein the carbon fibrous structures are contained at a rate of 0.01 - 50 % by weight based on the total weight of the coating material. The conductive coating material gives a coated film which shows a high electrical conductivity and a good film strength, and also coordinates its color as an intended one easily.

FIG. 4A

## Description

### TECHNICAL FIELD

This invention relates to a new conductive coating material. Particularly, this invention relates to a conductive sheet which has an excellent conductivity along with a good film strength, and which can easy coordinate its color as an intended one.

### BACKGROUND ART

In general, organic polymer materials such as resinous materials and rubber materials have been widely used as main body of products, housing of products, exterior or interior parts, etc., because the organic polymer materials are in light weight, have a good molding ability, and also exhibit good mechanical strength, elasticity, etc.

Further, since such organic polymer material can be easy colored by blending a coloring agent such as pigment or dye, it is generally made to color the product per se. Further, in the case that high grade coloring which gives excellent beauty, texture, consistency, etc., is required to the over all surface of a product which is manufactured by assembling molded article (s) made of the organic polymer, the product undergoes surface finishing by painting.

For instance, with respect to the exterior of automobiles, many parts involving, typically, bumper, front spoiler, side garnish, etc., aremoldedoutofresinmaterials, and they undergo painting to the same color or a unified color with the exterior panel parts made of steel panel such as door, engine hood, etc. As conventionally known, with respect to the painting for automobile, electrostatic coating procedure (involving electrostatic powder coating procedure) has been used for an intermediate coat, top coat, etc. Since the resin materials and rubber materials shows good electrical insulation in general, they are hardly painted by such the electrostatic coating procedure. Although it is possible that the resinous parts and automobile body are painted separately, and thereafter are installed in the automobile body, an additional painting line is required and thus the manufacturing cost becomes high. In addition, even if using the same composition of the painting, subtle differences in color tone between the individual parts will arise due to the differences in thermal histories on drying and baking steps, and thus it becomes difficult to obtain a totally systematic coloring. Therefore, it is practiced that a conductive primer is coated on the surface of the resinous parts in order to give the conductivity to the resinous parts, and the primer coated resinous parts are installed in the automobile body, and then the primer coated resinous parts undergo antistatic coating for the intermediate coat and the top coat in conjunction with the steel exterior panels.

Conventionally, as such a conductive primer, a composition in which conductive powder such as metallic powder, carbon black, etc., a surfactant, a polymer type antistatic agent such as siloxane type and otherwise are added in order to give the conductivity has been used.

In addition, the trials of giving the conductivity for the surfaces of the organic polymer materials such as resin materials and rubber materials has been also made in other fields, for instance, such as the techniques for forming conductor and wiring in printed wiring boards, liquid crystal display elements, organic EL elements, etc., and the field of seats for wrapping electronic parts in order to prevent electrostatic breakdown of these electronic parts during storage and transportation.

As the conductive inks used in such fields, the ink compositions in which conductive powder such as carbon black, etc was added have been used.

However, the surfactant which is added as the conductivity giving agent to the conductive coating composition such as above mentioned conductive primer, and conductive ink, is generally a low molecular compound, and the surfactant can functions as the conductivity giving agent when it bleeds out of the surface of the coated film. Thus, the surfactant tends to bleed out of the surface of plastics or coated film, and therefore, there is a possibility that the blocking phenomenon that the coated substrates are adhered mutually, and there is a problem that the conductivity giving effect deteriorates gradually because the surfactant existing on the surface is easily wiped out with using a detergent. Further, since the surfactant exhibits the conductivity by its hydrophilic groups when the surfactant absorbs water moiety, the effect of the surfactant is hardly obtained under a low humidity condition.

In the case of the polymer type antistatic agent such as siloxane type and otherwise, although the bleeding out as in the surfactant is not observed and the gradual deterioration is hardly found, it exhibits the conductivity with the water moiety as is the case of the surfactant. Thus, the effect of the polymer type antistatic agent is only obtained under a high humidity condition, and the antistatic effect does not reach a sufficient level.

On the other hand, in the case of the conductive inorganic filler such as metallic powder, carbon black, etc., there is an advantage that the given conductivity does not depend on the ambient humidity condition because its conductivity giving effect does not depend on its absorption of water. With respect to the conventional conductive coating composition which includes the metallic powder, carbon black or the like, however, some problems such as the appearance of aggregates in the coating composition; gradual deterioration in fluidity of the coating composition which is followed by improper solidification of the coating composition and coating difficulty; and difficulty of providing a coated film having an sufficient hardness after coating, etc., arise.

In Patent Literature 1, a conductive coating composition in which carbon nanofibers are added as the conductivity giving agent is disclosed. Incidentally, the descriptions of the related parts in the Patent Literature 1 are incorporated herein by their references.

The graphite layers which compose the carbon nanofiber are materials each of which takes a six membered ring' s regular array normally, and which can bring specific electrical properties, as well as chemically, mechanically, and thermally stable properties. Therefore, as long as such fine carbon fiber can make use of such properties upon blending and dispersing to the matrix of a coated film which is formed with the coating composition, it can be expected that the obtained film show good properties.

However, such carbon nanotubes unfortunately show an aggregate state even just after their synthesis and the cohesion force between them is high. When the aggregate is used as-is, it would arrive at a conclusion that the dispersion of the carbon nanofibers does not progress very far, and thus the product obtained can not enjoy ample properties. Accordingly, giving a desired electric conductivity to a polymer matrix, it is still necessitated that the fibers are added as a relatively larger amount into the matrix such as resin.

[Patent Literature 1] US Patent No. 5098771

## DISCROSURE OF THE INVENTION

## PROBLEMS TO BE SOLVED BY THIS INVENTION

Therefore, this invention aims to provide a conductive coating material which includes new carbon fibrous structures which have preferable physical properties as a conductivity giving agent, and which can improve electrical properties of a matrix while maintaining other properties of the matrix, when added to the matrix in a small amount.

## MEANS FOR SOLVING THE PROBLEMS

As a result of our diligent study for solving the above problems, we, the inventors, have found that, in order to give adequate electrical properties even in a small adding amount to the matrix, the effective things are to adapt carbon fibers having a diameter as small as possible; to make an sparse structure of the carbon fibers where the fibers are mutually combined tightly so that the fibers do not behave individually and which sustains their sparse state in the resin matrix; and to adapt as the carbon fibers per se ones which are designed to have a minimum amount of defects, and finally, we have accomplished the present invention.

The present invention to solve the above mentioned problems is, therefore, a conductive coating material which comprises an organic binder component and carbon fibrous structures, wherein the carbon fibrous structure comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers; and wherein the carbon fibrous structures are contained at a rate of 0.01 - 50 % by weight based on the total weight of the coating material.

The present invention also provides the above mentioned conductive coating material which is used for a conductive primer.

The present invention also provides the above mentioned conductive coating material which is used for a conductive ink.

The present invention further provides the above mentioned conductive coating material, wherein the carbon fibrous structures have an area-based circle-equivalent mean diameter of 50 - 100 $\mu$m.

The present invention further provides the above mentioned conductive coating material, wherein the carbon fibrous structures may have a bulk density of 0.0001 - 0.05g/cm$^3$.

The present invention further provides the above mentioned conductive coating material, wherein the carbon fibrous structures have $I_D/I_G$ ratio determined by Raman spectroscopy of not more than 0.2.

The present invention further provides the above mentioned conductive coating material, wherein the carbon fibrous structures are produced using as carbon sources at least two carbon compounds which have mutually different decomposition temperatures.

## EFFECT OF THE INVENTION

According to the present invention, since the carbon fibrous structure is one comprising carbon fibers of a ultrathin diameter which are configured three dimensionally, and are bound tightly together by a granular part produced in a growth process of the carbon fibers so that the concerned carbon fibers are externally elongated from the granular part, the carbon fibrous structures can disperse promptly into the polymer matrix of the formed coated film even at a small additive amount, while they maintain such a bulky structure. Thus, with respect to the conductive coating material according to the present invention, even when the carbon fibrous structures are added at a small amount, the fine carbon fibers can be distributed uniformly over the matrix of the formed coated film. Therefore, it is possible to obtain good electric conductive paths throughout the matrix, and thus to improve the electrical conductivity adequately. With respect to the mechanical and thermal properties, improvements can be expected in analogous fashions, since the fine carbon fibers as fillers are distributed evenly over the matrix. In addition, since the necessitated additive amount of the carbon fibrous structures can be repressed at a relatively low level, it is possible to adjust the color tone of the formed coated film not so as to have an extremely high blackness. Therefore, for instance, even when it is used as a primer for tinted paint, it is possible to perform the painting of tint color with a good color development without exerting an adverse influence to the color tone intended.

## BRIEF DESCRIPTION OF THE DRAWINGS

[Fig. 1] is a scanning electron micrograph (SEM photo) of an intermediate for the carbon fibrous structure which is used for the conductive coating material according to the present invention.

[Fig. 2] is a transmission electron micrograph (TEM photo) of an intermediate for the carbon fibrous structure which is used for the conductive coating material according to the present invention.

[Fig. 3] is a scanning electron micrograph (SEM photo) of a carbon fibrous structure which is used for the conductive coating material according to the present invention.

[Fig. 4A] and [Fig. 4B] are transmission electron micrographs (TEM) of carbon fibrous structures which are used for the conductive coating material according to the present invention.

[Fig. 5] is a scanning electron micrograph (SEM photo) of a carbon fibrous structure which is used for the conductive coating material according to the present invention.

[Fig. 6] is an X-ray diffraction chart of a carbon fibrous structure which is used for the conductive coating material according to the present invention and an intermediate thereof.

[Fig. 7] is Raman spectra of a carbon fibrous structure which is used for the conductive coating material according to the present invention and an intermediate thereof

[Fig. 8] is a schematic diagram which illustrates a generation furnace used for manufacturing the carbon fibrous structures in an example of the present invention.

## EXPLANATION OF NUMERALS

1 Generation furnace
2 Inlet nozzle
3 Collision member
4 Raw material mixture gas supply port
a Inner diameter of inlet nozzle
b Inner diameter of generation furnace
c Inner diameter of Collision member
d Distance from upper end of generation furnace to raw material mixture gas supply port
e Distance from raw material mixture gas supply port to lower end of collision member
f Distance from raw material mixture gas supply port to lower end of generation furnace

## BEST MODE FOR CARRYING OUT THE INVENTION

Now, the present invention will be described in detail with reference to some embodiments.
The conductive coating material according to this invention is characterized in that carbon fibrous structures each having a specific structure like a three dimensional network as mentioned later are contained at a rate of 0.01 - 50 % by weight based on the total weight of the coating material.

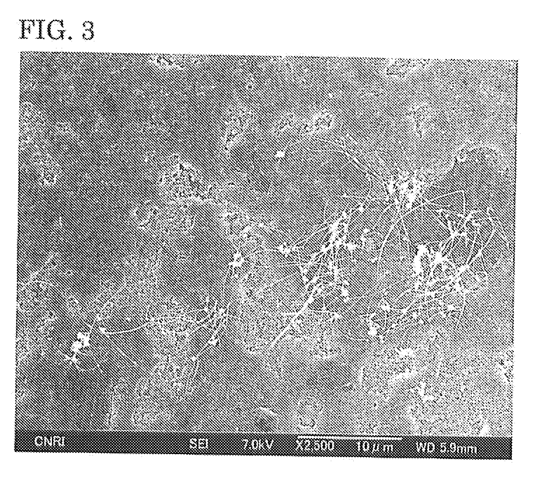

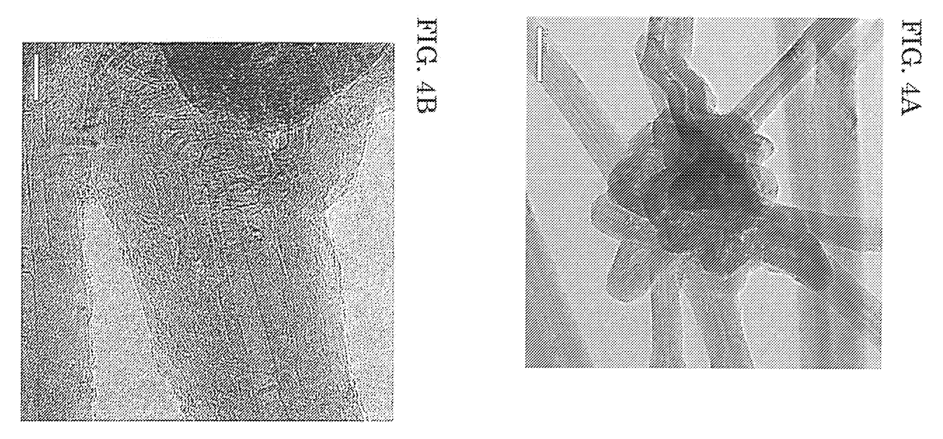

Each carbon fibrous structure to be used in the present invention is, as shown in SEM photo of Fig. 3 and TEM photos of Fig. 4A and 4B, composed of a thee-dimensionally network of carbon fibers each having an outside diameter of 15 - 100 nm, and a granular part with which the carbon fibers are bound together so that the concerned carbon fibers elongate outwardly from the granular part.

The reason for restricting the outside diameter of the carbon fibers which constitutes the carbon fibrous structure to a range of 15 nm to 100 nm is because when the outside diameter is less than 15 nm, the cross-sections of the carbon fibers do not have polygonal figures as described later. According to physical properties of the carbon fiber, the smaller the diameter of a fiber, the greater the number of carbon fibers will be for the same weight and/or the longer the length in the axial direction of the carbon fiber. This property would be followed by an enhanced electric conductivity. Thus, carbon fibrous structures having an outside diameter exceeding 100 nm are not preferred for use as modifiers or additives for a matrix such as a resin, etc. Particularly, it is more desirable for the outside diameter of the carbon fibers to be in the range of 20 - 70 nm. Carbon fibers that have a diameter within the preferable range and whose tubular graphene sheets are layered one by one in the direction that is orthogonal to the fiber axis, i.e., being of a multilayer type, can enjoy a high flexural rigidity and ample elasticity. In other words, such fibers would have a property of being easy to restore their original shape after undergoing any deformation. Therefore, even if the carbon fibrous structures have been compressed prior to being mixed into the matrix such as resin, they tend to take a sparse structure in the matrix.

Incidentally, when annealing at a temperature of not less than 2400˚C, the spacing between the layered graphene sheets becomes lesser and the true density of the carbon fiber is increased from 1.89 g/cm$^3$ to 2.1 g/cm$^3$, and the cross sections of the carbon fiber perpendicular to the axis of carbon fiber come to show polygonal figures. As a result, the carbon fibers having such constitution become denser and have fewer defects in both the stacking direction and the surface direction of the graphene sheets that make up the carbon fiber, and thus their flexural rigidity (EI) can be enhanced.

Additionally, it is preferable that the outside diameter of the fine carbon fiber undergoes a change along the axial direction of the fiber. In the case that the outside diameter of the carbon fiber is not constant, but changed along the axial direction of the fiber, it would be expected that some anchor effect may be provided to the carbon fiber in the matrix such as resin, and thus the migration of the carbon fiber in the matrix can be restrained, leading to improved dispersion stability.

Then, in the carbon fibrous structure used in the present invention, fine carbon fibers having a predetermined outside diameter and being configured three dimensionally are bound together by a granular part produced in a growth process of the carbon fibers so that the carbon fibers are elongated outwardly from the granular part. Since multiple carbon fibers are not only entangled each other, but tightly bound together at the granular part, the carbon fibers will not disperse as single fibers, but will be dispersed as intact bulky carbon fibrous structures when added to the matrix such as resin. Since the fine carbon fibers are bound together by a granular part produced in the growth process of the carbon fibers in the carbon fibrous structure to be used in the present invention, the carbon fibrous structure itself can enjoy superior properties such as electric property. For instance, when determining electrical resistance under a certain pressed density, the carbon fibrous structure to be used in the present invention shows an extremely low resistivity, as compared with that of a simple aggregate of the fine carbon fibers and that of the carbon fibrous structures in which the fine carbon fibers are fixed at the contacting points with a carbonaceous material or carbonized substance therefrom after the synthesis of the carbon fibers. Thus, when the carbon fibrous structures added and distributed in a matrix, they can form good conductive paths within the matrix.

Since the granular part is produced in the growth process of the carbon fibers as mentioned above, the carbon - carbon bonds at the granular part are well developed. Further, the granular part appears to include mixed state of sp$^2$- and sp$^3$- bonds, although it is not clear accurately. After the synthesis process (in the "intermediate" or "first intermediate" defined hereinafter), the granular part and the fibrous parts are continuous mutually because of a structure comprising patch-like sheets of carbon atoms laminated together. Further, after the high temperature treatment, at least a part of graphene layers constituting the granular part is continued on graphene layers constituting the fine carbon fibers elongated outwardly from the granular part, as shown in Figs. 4A and 4B. In the carbon fibrous structure according to the present invention, as symbolized by such a fact that the graphene layers constituting the granular part is continued on the graphene layers constituting the fine carbon fibers, the granular part and the fine carbon fibers are bound together (at least in a part) by carbon crystalline structural bonds. Thus, strong couplings between the granular part and each fine carbon fiber are produced.

With respect to the carbon fibers, the condition of being "extended outwardly" from the granular part used herein means principally that the carbon fibers and granular part are linked together by carbon crystalline structural bonds as mentioned above, but does not means that they are apparently combined together by any additional binding agent (involving carbonaceous ones).

As traces of the fact that the granular part is produced in the growth process of the carbon fibers as mentioned above, the granular part has at least one catalyst particle or void therein, the void being formed due to the volatilization and elimination of the catalyst particle during the heating process after the generation process. The void (or catalyst particle) is essentially independent from hollow parts which are formed in individual fine carbon fibers which are extended outwardly from the granular part (although, a few voids which happened to be associated with the hollow part may be observed) .

Although the number of the catalyst particles or voids is not particularly limited, it may be about 1 - 1000 a granular particle, more preferably, about 3 - 500 a granular particle. When the granular part is formed under the presence of catalyst particles the number of which is within the range mentioned above, the granular part formed can have a desirable size as mentioned later.

The per-unit size of the catalyst particle or void existing in the granular particle may be, for example, 1 - 100 nm, preferably, 2 - 40 nm, and more preferably, 3 - 15 nm.

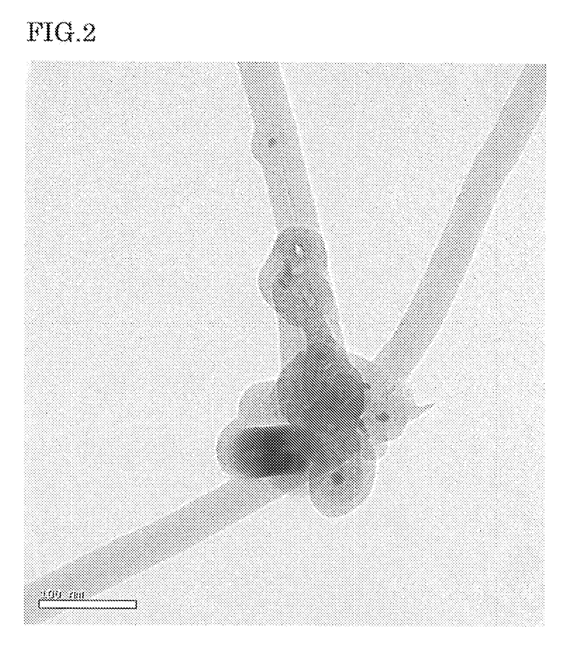

Furthermore, it is preferable that the diameter of the granular part is larger than the outside diameter of the carbon fibers as shown in Fig.2, although it is not specifically limited thereto. Concretely, for example, the diameter of granular part is 1.3 - 250 times larger than the outside diameter of the carbon fibers, preferably 1.5 - 100 times, and more preferably, 2.0 - 25 times larger, on average. When the granular part, which is the binding site of the carbon fibers, has a much larger particle diameter, that is, 1.3 times or more larger than the outer diameter of the carbon fibers, the carbon fibers that are elongated outwardly from the granular part have stronger binding force, and thus, even when the carbon fibrous structures are exposed to a relatively high shear stress during combining with a matrix such as resin, they can be dispersed as maintaining its three-dimensional carbon fibrous structures into the matrix. When the granular part has an extremely larger particle diameter, that is, exceeding 250 times of the outer diameter of the carbon fibers, the undesirable possibility that the fibrous characteristics of the carbon fibrous structure are lost will arise. Therefore, the carbon fibrous structure will not be suitable for an additive or compounding agent to various matrixes, and thus it is not desirable. The "particle diameter of the granular part" used herein is the value which is measured by assuming that the granular part, which is the binding site for the mutual carbon fibers, is one spherical particle.

Although the concrete value for the particle diameter of the granular part will be depended on the size of the carbon fibrous structure and the outer diameters of the fine carbon fibers in the carbon fibrous structure, for example, it may be 20 - 5000 nm, more preferably, 25 - 2000 nm, and most preferably, 30 - 500 nm, on average.

Furthermore, the granular part may be roughly globular in shape because the part is produced in the growth process of the carbon fibers as mentioned above. On average, the degree of roundness thereof may lay in the range of from 0.2 to <1, preferably, 0.5 to 0.99, and more preferably, 0.7 to 0.98.

Additionally, the binding of the carbon fibers at the granular part is very tight as compared with, for example, that in the structure in which mutual contacting points among the carbon fibers are fixed with carbonaceous material or carbonized substance therefrom. It is also because the granular part is produced in the growth process of the carbon fibers as mentioned above. Even under such a condition as to bring about breakages in the carbon fibers of the carbon fibrous structure, the granular part (the binding site) is maintained stably. Specifically, for example, when the carbon fibrous structures are dispersed in a liquid medium and then subjected to ultrasonic treatment with a selected wavelength and a constant power under a load condition by which the average length of the carbon fibers is reduced to about half of its initial value as shown in the Examples described later, the changing rate in the mean diameter of the granular parts is not more than 10%, preferably, not more than 5%, thus, the granular parts, i.e., the binding sites of fibers are maintained stably.

In carbon fibrous structures to be used in the present invention, it is preferable that the carbon fibrous structure has an area-based circle-equivalent mean diameter of 50 - 100 $\mu$m, and more preferably, 60 - 90 $\mu$m. The "area-based circle-equivalent mean diameter" used herein is the value which is determined by taking a picture of the outside shapes of the carbon fibrous structures with a suitable electron microscope, etc., tracing the contours of the respective carbon fibrous structures in the obtained picture using a suitable image analysis software, e.g., WinRoof™ (Mitani Corp.), and measuring the area within each individual contour, calculating the circle-equivalent mean diameter of each individual carbon fibrous structure, and then, averaging the calculated data.

Although it is not to be applied in all cases because the circle-equivalent mean diameter may be influenced by the kind of matrix material such as a resin to be complexed, the circle-equivalent mean diameter may become a factor by which the maximum length of a carbon fibrous structure upon combining with a matrix such as resin is determined. In general, when the circle-equivalent mean diameter is not more than 50 $\mu$m, the electrical conductivity of the obtained composite may not be expected to reach a sufficient level, while when it exceeds 100 $\mu$m, an undesirable increase in viscosity may be expected to happen upon kneading of the carbon fibrous structures in the matrix. The increase in viscosity may be followed by failure of dispersion of the carbon fibrous structures into the matrix, or inferiority of moldability.

As mentioned above, the carbon fibrous structure according to the present invention has the configuration where the fine carbon fibers existing in three dimensional network state are bound together by the granular part (s) so that the carbon fibers are externally elongated from the granular part(s). When two or more granular parts are present in a carbon fibrous structure, wherein each granular part binds the fibers so as to form the three dimensional network, the mean distance between adjacent granular parts may be, for example, 0.5 - 300 $\mu$m, preferably, 0.5 - 100 $\mu$m, and more preferably, 1 - 50 $\mu$m. The distance between adjacent granular parts used herein is determined by measuring distance from the center of a granular part to the center of another granular part which is adjacent the former granular part. When the mean distance between the granular parts is less than 0.5 $\mu$m, a configuration where the carbon fibers form an inadequately developed three dimensional network may be obtained. Therefore, it may become difficult to form good electrically conductive paths when the carbon fiber structures each having such an inadequately developed three dimensional network are added and dispersed to a matrix such as a resin. Meanwhile, when the mean distance exceeds 300 μm, an undesirable increase in viscosity may be expected to happen upon adding and dispersing the carbon fibrous structures in the matrix. The increase in viscosity may result in an inferior dispersibility of the carbon fibrous structures to the matrix.

Furthermore, the carbon fibrous structure to be used in the present invention may exhibit a bulky, loose form in which the carbon fibers are sparsely dispersed, because the carbon fibrous structure is comprised of carbon fibers that are configured as a three dimensional network and are bound together by a granular part so that the carbon fibers are elongated outwardly from the granular part as mentioned above. It is desirable that the bulk density thereof is in the range of 0.0001 - 0.05 g/cm$^3$, more preferably, 0.001 - 0.02 g/cm$^3$. When the bulk density exceeds 0.05 g/cm$^3$, it would become difficult to improve the physical properties of the matrix such as resin with a small dosage.

Furthermore, a carbon fibrous structure to be used in the present invention can enjoy good electric properties in itself, since the carbon fibers configured as a three dimensional network in the structure are bound together by a granular part produced in the growth process of the carbon fibers as mentioned above. For instance, it is desirable that a carbon fibrous structure to be used in the present invention has a powder electric resistance determined under a certain pressed density, 0.8 g/cm$^3$, of not more than 0.02 Ω·cm, more preferably, 0.001 to 0.010 Ω·cm. If the particle's resistance exceeds 0.02 Ω·cm, it may become difficult to form good electrically conductive paths when the structures are added to a matrix such as a resin.

In order to enhance the strength and electric conductivity of the carbon fibrous structure used in the present invention, it is desirable that the graphene sheets that make up the carbon fibers have a small number of defects, and more specifically, for example, the $I_D/I_G$ ratio of the carbon fiber determined by Raman spectroscopy is not more than 0.2, more preferably, not more than 0.1. Incidentally, in Raman spectroscopic analysis, with respect to a large single crystal graphite, only the peak (G band) at 1580 cm$^{-1}$ appears. When the crystals are of finite ultrafine sizes or have any lattice defects, the peak (D band) at 1360 cm$^{-1}$ can appear. Therefore, when the intensity ratio ($R=I_{1360}/I_{1580}=I_D/I_G$) of the D band and the G band is below the selected range as mentioned above, it is possible to say that there is little defect in graphene sheets.

Furthermore, it is desirable that the carbon fibrous structure to be used in the present invention has a combustion initiation temperature in air of not less than 750 ˚C, preferably, 800 ˚C - 900 ˚C. Such a high thermal stability would be brought about by the above mentioned facts that it has little defects and that the carbon fibers have a predetermined outside diameter.

A carbon fibrous structure having the above described, desirable configuration may be prepared as follows, although it is not limited thereto.

Basically, an organic compound such as a hydrocarbon is chemical thermally decomposed through the CVD process in the presence of ultrafine particles of a transition metal as a catalyst in order to obtain a fibrous structure (hereinafter referred to as an "intermediate"), and then the intermediate thus obtained undergoes a high temperature heating treatment.

As a raw material organic compound, hydrocarbons such as benzene, toluene, xylene; carbon monoxide (CO); and alcohols such as ethanol may be used. It is preferable, but not limited, to use as carbon sources at least two carbon compounds which have different decomposition temperatures. Incidentally, the words "at least two carbon compounds" used herein not only include two or more kinds of raw materials, but also include one kind of raw material that can undergo a reaction, such as hydrodealkylation of toluene or xylene, during the course of synthesis of the fibrous structure such that in the subsequent thermal decomposition procedure it can function as at least two kinds of carbon compounds having different decomposition temperatures.

When as the carbon sources at least two kinds of carbon compounds are provided in the thermal decomposition reaction system, the decomposition temperatures of individual carbon compounds may be varied not only by the kinds of the carbon compounds, but also by the gas partial pressures of individual carbon compounds, or molar ratio between the compounds. Therefore, as the carbon compounds, a relatively large number of combinations can be used by adjusting the composition ratio of two or more carbon compounds in the raw gas.

For example, the carbon fibrous structure to be used in the present invention can be prepared by using two or more carbon compounds in combination, while adjusting the gas partial pressures of the carbon compounds so that each compound performs mutually different decomposition temperature within a selected thermal decomposition reaction temperature range, and/or adjusting the residence time for the carbon compounds in the selected temperature region, wherein the carbon compounds to be selected are selected from the group consisting of alkanes or cycloalkanes such as methane, ethane, propanes, butanes, pentanes, hexanes, heptane, cyclopropane, cycrohexane, particularly, alkanes having 1 -7 carbon atoms; alkenes or cycloolefin such as ethylene, propylene, butylenes, pentenes, heptenes, cyclopentene, particularly, alkenes having 1 - 7 carbon atoms; alkynes such as acetylene, propyne, particularly, alkynes having 1 - 7 carbon atoms; aromatic or heteroaromatic hydorocarbons such as benzene, toluene, styrene, xylene, naphthalene, methyl naphtalene, indene, phenanthrene, particularly, aromatic or heteroaromatic hydorocarbons having 6 -18 carbon atoms; alcohols such as methanol, ethanol, particularly, alcohols having 1 -7 carbon atoms; and other carbon compounds involving such as carbon monoxide, ketones, ethers. Further, to optimize the mixing ratio can contribute to the efficiency of the preparation.

When a combination of methane and benzene is utilized among such combinations of two or more carbon compounds, it is desirable that the molar ratio of methane/benzene is >1 - 600, preferably, 1.1 - 200, and more preferably 3 -100. The ratio is for the gas composition ratio at the inlet of the reaction furnace. For instance, when as one of carbon sources toluene is used, in consideration of the matter that 100% of the toluene decomposes into methane and benzene in proportions of 1:1 in the reaction furnace, only a deficiency of methane may be supplied separately. For example, in the case of adjusting the methane / benzene molar ratio to 3, 2 mol methane may be added to 1 mol toluene. As the methane to be added to the toluene, it is possible to use the methane which is contained as an unreacted form in the exhaust gas discharged from the reaction furnace, as well as a freshmethane specially supplied.

Using the composition ratio within such a range, it is possible to obtain the carbon fibrous structure in which both the carbon fiber parts and granular parts are efficiently developed.

Inert gases such as argon, helium, xenon; and hydrogen may be used as an atmosphere gas.

A mixture of transition metal such as iron, cobalt, molybdenum, or transition metal compounds such as ferrocene, metal acetate; and sulfur or a sulfur compound such as thiophene, ferric sulfide; may be used as a catalyst.

The intermediate may be synthesized using a CVD process with hydrocarbon or etc., which has been conventionally used in the art. The steps may comprise gasifying a mixture of hydrocarbon and a catalyst as a raw material, supplying the gasified mixture into a reaction furnace along with a carrier gas such as hydrogen gas, etc., and undergoing thermal decomposition at a temperature in the range of 800 ˚C - 1300 ˚C. By following such synthesis procedures, the product obtained is an aggregate, which is of several to several tens of centimeters in size and which is composed of plural carbon fibrous structures (intermediates), each of which has a three dimensional configuration where fibers having 15 - 100 nm in outside diameter are bound together by a granular part that has grown around the catalyst particle as the nucleus.

The thermal decomposition reaction of the hydrocarbon raw material mainly occurs on the surface of the catalyst particles or on growing surface of granular parts that have grown around the catalyst particles as the nucleus, and the fibrous growth of carbon may be achieved when the recrystallization of the carbons generated by the decomposition progresses in a constant direction. When obtaining carbon fibrous structures according to the present invention, however, the balance between the thermal decomposition rate and the carbon fiber growth rate is intentionally varied. Namely, for instance, as mentioned above, to use as carbon sources at least two kinds of carbon compounds having different decomposition temperatures may allow the carbonaceous material to grow three dimensionally around the granular part as a centre, rather than in one dimensional direction. The three dimensional growth of the carbon fibers depends not only on the balance between the thermal decomposition rate and the growing rate, but also on the selectivity of the crystal face of the catalyst particle, residence time in the reaction furnace, temperature distribution in the furnace, etc. The balance between the decomposition rate and the growing rate is affected not only by the kinds of carbon sources mentioned above, but also by reaction temperatures, and gas temperatures, etc. Generally, when the growing rate is faster than the decomposition rate, the carbon material tends to grow into fibers, whereas when the thermal decomposition rate is faster than the growing rate, the carbon material tends to grow in peripheral directions of the catalyst particle. Accordingly, by changing the balance between the thermal decomposition rate and the growing rate intentionally, it is possible to control the growth of carbon material to occur in multi-direction rather than in single direction, and to produce three dimensional structures that are related to the present invention. In order to form the above mentioned three-dimensional configuration, where the fibers are bound together by a granular part, with ease, it is desirable to optimize the compositions such as the catalyst used, the residence time in the reaction furnace, the reaction temperature and the gas temperature.

With respect to the method for preparing the carbon fibrous structure to be used in the present invention with efficiency, as another approach to the aforementioned one that two or more carbon compounds which have mutually different decomposition temperature are used in an appropriate mixing ratio, there is an approach that the raw material gas supplied into the reaction furnace from a supply port is forced to form a turbulent flow in proximity to the supply port. The "turbulent flow" used herein means a furiously irregular flow, such as flow with vortexes.

In the reaction furnace, immediately after the raw material gas is supplied into the reaction furnace from the supply port, metal catalyst fine particles are produced by the decomposition of the transition metal compound as the catalyst involved in the raw material gas. The production of the fine particles is carried out through the following steps. Namely, at first, the transition metal compound is decomposed to make metal atoms, then, plural number of, for example, about one hundred of metal atoms come into collisions with each other to create a cluster. At the created cluster state, it can not function as a catalyst for the fine carbon fiber. Then, the clusters further are aggregated by collisions with each other to grow into a metal crystalline particle of about 3 - 10 nm in size, and which particle comes into use as the metal catalyst fine particle for producing the fine carbon fiber.

During the catalyst formation process as mentioned above, if the vortex flows belonging to the furiously turbulent flow are present, it is possible that the collisions of metal atoms or collisions of clusters become more vigorously as compared with the collisions only due to the Brownian movement of atoms or collisions, and thus the collision frequency per unit time is enhanced so that the metal catalyst fine particles are produced within a shorter time and with higher efficiency. Further, since concentration, temperature, etc. are homogenized by the force of vortex flow, the obtained metal catalyst fine particles become uniform in size. Additionally, during the process of producing metal catalyst fine particles, a metal catalyst particles' aggregate in which numerous metal crystalline particles was aggregated by vigorous collisions with the force of vortex flows can be also formed. Since the metal catalyst particles are rapidly produced as mentioned above, the decomposition of carbon compound can be accelerated so that an ample amount of carbonaceous material can be provided. Whereby, the fine carbon fibers grow up in a radial pattern by taking individual metal catalyst particles in the aggregate as nuclei. When the thermal decomposition rate of a part of carbon compounds is faster than the growing rate of the carbon material as previously described, the carbon material may also grow in the circumferential direction so as to form the granular part around the aggregate, and thus the carbon fiber structure of the desired three dimensional configuration may be obtained with efficiency. Incidentally, it may be also considered that there is a possibility that some of the metal catalyst fine particles in the aggregate are ones that have a lower activity than the other particles or ones that are deactivated on the reaction. If non-fibrous or very short fibrous carbon material layers grown by such catalyst fine particles before or after the catalyst fine particles aggregate are present at the circumferential area of the aggregate, the granular part of the carbon fiber structure to be used in the present invention may be formed.

The concrete means for creating the turbulence to the raw material gas flow near the supply port for the raw material gas is not particularly limited. For example, it is adaptable to provide some type of collision member at a position where the raw material gas flow introduced from the supply port can be interfered by the collision section. The shape of the collision section is not particularly limited, as far as an adequate turbulent flow can be formed in the reaction furnace by the vortex flow which is created at the collision section as the starting point. For example, embodiments where various shapes of baffles, paddles, tapered tubes, umbrella shaped elements, etc., are used singly or in varying combinations and located at one or more positions may be adaptable.

The intermediate, obtained by heating the mixture of the catalyst and hydrocarbon at a constant temperature in the range of 800 ˚C - 1300˚C, has a structure that resembles sheets of carbon atoms laminated together, (and being still in a half-raw, or incomplete condition) . When analyzed with Raman spectroscopy, the D band of the intermediate is very large and many defects are observed. Further, the obtained intermediate is associated with unreacted raw materials, nonfibrous carbon, tar moiety, and catalyst metal.

Therefore, the intermediate is subjected to a high temperature heat treatment at 2400 - 3000 ˚C using a proper method in order to remove such residues from the intermediate and to produce the intended carbon fibrous structure with few defects.

For instance, the intermediate may be heated at 800 - 1200 ˚C to remove the unreacted raw material and volatile flux such as the tar moiety, and thereafter annealed at a high temperature of 2400 - 3000 ˚C to produce the intended structure and, concurrently, to vaporize the catalyst metal, which is included in the fibers, to remove it from the fibers. In this process, it is possible to add a small amount of a reducing gas and carbon monoxide into the inert gas atmosphere to protect the carbon structures.

By annealing the intermediate at a temperature of 2400 - 3000 ˚C, the patch-like sheets of carbon atoms are rearranged to associate mutually and then form multiple graphene sheet-like layers.

After or before such a high temperature heat treatment, the aggregates may be subjected to crushing in order to obtain carbon fibrous structures, each having an area-based circle-equivalent mean diameter of several centimeters. Then, the obtained carbon fibrous structures may be subjected to pulverization in order to obtain the carbon fibrous structures having an area-based circle-equivalent mean diameter of 50 - 100 $\mu$m. It is also possible to perform the pulverization directly without crushing. On the other hand, the initial aggregates involving plural carbon fibrous structures to be used in the present invention may also be granulated for adjusting shape, size, or bulk density to one's suitable for using a particular application. More preferably, in order to utilize effectively the above structure formed from the reaction, the annealing would be performed in a state such that the bulk density is low (the state that the fibers are extended as much as they can and the voidage is sufficiently large). Such a state may contribute to improved electric conductivity of a resin matrix.

The carbon fibrous structures used in the present invention may have the following properties:

A) a low bulk density;
B) a good dispersibility in a matrix such as resin;
C) a high electrical conductivity;
D) a high heat conductivity;
E) a good slidability;
F) a good chemical stability;
G) a high thermal stability; and etc.

The conductive coating material according to the present invention comprises the carbon fibrous structures as above mentioned and the organic binder component. As the organic binder component to be used in the present invention, one or more of various organic binder(s) of being in either solid or liquid at ordinary temperatures (25 ˚C ± 5 ˚C) are usable depending upon the usage of the conductive coating material, etc.

Concretely, for example, various organic binders used normally in the solvent type paints and the oil printing ink such as acrylic resins; alkyd resins; polyester resins; polyurethane resins; epoxy resins; phenolic resins; melamine resins; amino resins; vinyl chloride resins; silicone resins; rosin type resins such as gum rosin, lime rosin, etc.; maleic resins; polyamide resins; nitrocellulose, ethylene - vinyl acetate copolymer; rosin modified resins such as rosin modified phenolic resin, rosin modified maleic resin, etc; and petroleum resins, etc., are usable. Alternatively, various aqueous binders used for aqueous type paints and aqueous inks such as water-soluble acrylic resins, water-soluble styrene - maleic acid resins, water-soluble alkyd resins, water-soluble melamine resins, water-soluble urethane emulsion resins, water-soluble epoxy resins, and water-soluble polyester resins, etc., are usable.

In addition to the above mentioned organic binder component and the carbon fibrous structures, the conductive coating material of the present invention may contain various known additives such as solvents, oils and fats, defoaming agents, coloring agents involving dyes, pigments and extender pigments, drying accelerators, surfactants, hardening accelerators, auxiliaries, plasticizers, lubricants, antioxidants, ultraviolet rays absorbents, various stabilizers, etc., optionally.

As the solvent, various solvents used normally in the solvent type paints and printing inks such as soybean oil; toluene, xylene, thinners; butyl acetate, methyl acetate; methyl isobutyl ketone; glycol ether type solvents such as methyl cellosolve, ethyl cellosolve, propyl cellosolve, butyl cellosolve, propylene glycol monomethyl ether; ester type solvents such as ethyl acetate, butyl acetate, amyl acetate; aliphatic hydrocarbon type solvents such as hexane, heptane, octane; alicyclic hydrocarbon type solvents such as cyclohexane; petroleum type solvent such as mineral spirit; ketone type solvents such as acetone, methyl ethyl ketone; alcohol type solvents such as methyl alcohol, ethyl alcohol, propyl alcohols, butyl alcohols; and aliphatic hydrocarbons, etc., are usable.

Alternatively, as solvent for aqueous type paint, mixtures of water and aqueous organic solvent(s) which are normally used for aqueous paint or ink are usable. The aqueous organic solvent involves, for instance, alcohol type solvents such as ethyl alcohol, propyl alcohols, butyl alcohols; glycol ether type solvents such as methyl cellosolve, ethyl cellosolve, propyl cellosolve, butyl cellosolve; oxyethylene or oxypropylene addition polymer such as diethylene glycol, triethylene glycol, polyethylene glycol, dipropylene glycol, tripropylene glycol, polyethylene glycol; alkylene glycols such as ethylene glycol, propylene glycol, 1,2,6-hexane triol; glycerin; 2-pyrrolidone; etc.

As oils and fats, boiled oils prepared by modifying drying oil such as linseed oil, tung oil, oiticica oil, safflower oil, etc., are usable.

As for the defoaming agent, coloring agent, drying accelerator, surfactant, hardening accelerator, auxiliary, plasticizer, lubricant, antioxidant, ultraviolet rays absorbent, and various stabilizers, various known compounds conventionally used in the conductive coating material can be used.

The conductive coating material according to the present invention includes the aforementioned carbon fibrous structures at an effective amount in conjunction with the organic binder component as mentioned above.

Although the amount depends on the usage of the conductive coating material intended and the kind of the organic binder component to be used, but it is in the range of about 0.01 to about 50 % by weight of total weight of the conductive coating material. When less than 0.01 % by weight, the electrical conductivity of the formed coated film may fall into an inadequate level. While when more than 50 % by weight, the strength of the coated film may decline oppositely, and the adherent property to the substrate to be coated, such as resinous parts, etc., also become worse. In the conductive coating material according to the present invention, the carbon fibrous structures can distribute themselves uniformly throughout the matrix even when the carbon fibrous structures are added at the relative small amount, and as described above, it is possible to form the conductive coated film of bearing good electrical conductivity.

As a manufacturing method for the conductive coating composition according to the present invention, there is no particular limitation, and thus, any manufacturing method can be utilized unless it loads an excessive shearing stress to the fine carbon fibrous structures on mixing the organic binder component and the fine carbon fibrous structures and thereby the shapes of the fine carbon fibrous structures are disrupted. Namely, the conductive coating material can be prepared in accordance with any one of various wet and dry mixing procedures. Further, in order to improve the quality stability of the obtained conductive coating material still higher, it is possible to provide an additional step of removing bulky particles, such as centrifugal separation or filtering.

Although the usage of the conductive coating material according to the present invention is not particularly limited, for instance, the conductive coating material may be used as a conductive primer which is used on the preliminary treatment for electrostatic painting (involving electrostatic powder painting); a conductive ink for producing electrode, conductor, wiring, etc., in the various electronics devices such as printed wiring boards, liquid crystal display elements, organic EL elements, etc.; or a conductive ink for providing a surface conductive layer of the electronic part wrapping sheet for preventing electrostatic breakdown of these electronic parts during storage and transportation, or for providing an electrostatic eliminating layer formed on a surface such as the surface of partitions used in a clean room, or the surface of a viewing window in a test instrument; etc., can be exemplified.

The article being coated with the conductive coating material according to the present invention is not particularly limited as long as the material surface of which is intended to become conductive, various organic and inorganic articles can be targeted. For instance, in the field of the automobile manufacturing, resinous materials used for the interior and exterior parts of the automobile, particularly, bumper, fender, front spoiler, rear spoilers, side garnish, etc., formed by a polyolefin type resin such as polypropylene resin, ethylene - propylene type resins, ethylene - propylene - diene type resins, ethylene - olefin type resins, etc., or a urethane type resin, which are frequently used because of their excellent recycling capability, are enumerated.

When the conductive coating material according to the present invention is used as the conductive primer for constructing a composite paint coating such as automobile paint coating and once the conductive coating layer is formed on the surface of the resinous parts as mentioned above, it is possible to apply colored paints such as intermediate coat and top coat, and further a clear paint using the electrostatic coating procedure or the electrostatic powder coating procedure, accompanied with good coating adhesiveness.

Incidentally, as the colored paints such as intermediate coat's paint and top coat's paint, and as the clear coat's paint which is optionally coated onto the colored top coat, any known compositions thereof are usable. Concretely, for instance, solid color paints, metallic color paints, interference color paints, and clear paints, etc., of acrylic resin - melamine resin type paints, acrylic resin - (block) isocyanate type paints, etc., are enumerated. The form of the paint, such as above mentioned intermediate coat' s paints, top coat's paints, and clear coat's paint, is not particularly limited, and, for instance, organic solvent type, aqueous solution type, water dispersion type, high solid type, powder type, etc., are enumerated. The coated film thereof can be dried or hardened, at room temperature, by heating, by irradiation of activated energy rays, etc.

Although the thickness of the conductive coated film formed by the conductive coating material according to the present invention is not particularly limited, it is desirable to be in the range of about 1.0 - about 30 $\mu$m, more preferably, about 2 - about 15 $\mu$m. When the thickness is less than 0.1 $\mu$m, there is a fear that a sufficient covering property of the film can not be attained and thus the uniform conductivity can not be attained. On the other hand, even when the sheet is thickened exceeds 30 $\mu$m, it is hardly expected to obtain a substantial increment in the conductive property as compared with that of lesser thicknesses. Further, the deterioration of the coated film's strength and the dark increment in hue may be also considered.

The conductive coated film which is formed by the conductive coating material according to the present invention can typically show a volume resistivity of not more than $10^{12}$ $\Omega \cdot$cm, more preferably, $10^2$ - $10^{10}$ $\Omega \cdot$cm$^2$, although the volume resistivity of the film is not particularly limited thereto.

Further, since the conductive coated film formed by the conductive coating material according to the present invention can be prepared as one of colorless or having a light gray color, even if a tint color type top coat, such as white type color, high color saturation's red or yellow type solid color, pearl mica color, which has an inferior masking effect to the under layer, is used as the top coat in the composite paint coating and thus the primer coat laid under the top coat can be seen through the top coat, the color of the layer of the primer coat laid under the top coat is inconspicuous. Therefore, thebeautyofthetopcoatinitself is not damaged, and thus the applicability of such top coat's paint is not limited by the primer.

**EXAMPLES**

Hereinafter, this invention will be illustrated in detail by practical examples. However, the invention is not limited to the following examples.

The respective physical properties illustrated later are measured by the following protocols.

<Area based circle-equivalent mean diameter>

First, a photograph of pulverized product was taken with SEM. On the taken SEM photo, only carbon fibrous structures with a clear contour were taken as objects to be measured, and broken ones with unclear contours were omitted. Using all carbon fibrous structures that can be taken as obj ects in one single field of view (approximately, 60 - 80 pieces), about 200 pieces in total were measured with three fields of views. Contours of the individual carbon fibrous structures were traced using the image analysis software, WinRoof™ (trade name, marketed by Mitani Corp.), and area within each individual contour was measured, circle-equivalent mean diameter of each individual carbon fibrous structure was calculated, and then, the calculated data were averaged to determine the area based circle-equivalent mean diameter.

<Measurement of Bulk density>

1 g of powder was placed into a 70 mm caliber transparent cylinder equipped with a distribution plate, then air supply at 0.1 Mpa of pressure, and 1. 3 liter in capacity was applied from the lower side of the distribution plate in order to blow off the powder and thereafter allowed the powder to settle naturally. After the fifth air blowing, the height of the settled powder layer was measured. Any 6 points were adopted as the measuring points, and the average of the 6 points was calculated in order to determine the bulk density.

<Raman spectroscopic analysis>

The Raman spectroscopic analysis was performed with the equipment LabRam 800 manufactured by HORIBA JOBIN YVON, S.A.S., and using 514 nm the argon laser.

<TG combustion temperature>

Combustion behavior was determined using TG-DTA manufactured by MAC SCIENCE CO. LTD., at air flow rate of 0.1 liter/minute and heating rate of 10 ˚C/minute. When burning, TG indicates a quantity reduction and DTA indicates an exothermic peak. Thus, the top position of the exothermic peak was defined as the combustion initiation temperature.

<X ray diffraction>

Using the powder X ray diffraction equipment (JDX3532, manufactured by JEOL Ltd.), carbon fibrous structures after annealing processing were examined. $K\alpha$ ray which was generated with Cu tube at 40 kV, 30 mA was used, and the measurement of the spacing was performed in accordance with the method defined by The Japan Society for the Promotion of Science (JSPS), described in "Latest Experimental Technique For Carbon Materials (Analysis Part)", Edited by Carbon Society of Japan, 2001), and as the internal standard silicon powder was used.

<Particle's resistance and decompressibility>

1 g of CNT powder was scaled, and then press-loaded into a resinous die (inner dimensions: 40 L, 10 W, 80 H (mm)), and the displacement and load were read out. A constant current was applied to the powder by the four-terminal method, and in this condition the voltage was measured. Aftermeasuring the voltage until the density come to $0.9 \text{g/cm}^3$, the applied pressure was released and the density after decompression was measured. Measurements taken when the powder was compressed to 0.5, 0.8 or 0.9 $\text{g/cm}^3$ were adopted as the particle's resistance.

<Mean diameter and roundness of the granular part, and ratio of the granular part to the fine carbon fiber>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, assuming each individual granular part which is the binding point of carbon fibers to be a particle, contours of the individual granular parts were traced using the image analysis software, WinRoof ™ (trade name, marketed by Mitani Corp.), and area within each individual contour was measured, circle-equivalent mean diameter of each individual granular part was calculated, and then, the calculated data were averaged to determine the area based circle-equivalent mean diameter. Roundness (R) was determined by inputting value of the area(A) within each individual contour computed by the above and a measured value of each individual contour's length (L) to the following equation to calculate the roundness of each individual granular part, and then, averaging the calculated data.

[Numerical Formula 1]

$$R = A * 4\pi / L^2$$

Further, the outer diameter of the fine carbon fibers in the individual carbon fibrous structures to be measured were determined, and then, from the outer diameter determined and the circle-equivalent mean diameter of the granular part calculated as above, the ratio of circle-equivalent mean diameter to the outer diameter of the fine carbon fiber was calculated for each individual carbon fibrous structure, and then the data obtained are averaged.

<Mean distance between granular parts>

First, a photograph of the carbon fibrous structures was taken with SEM in an analogous fashion as in the measurement of area based circle-equivalent mean diameter. On the taken SEM photo, only carbon fibrous structures with a clear contour were taken as objects to be measured, and broken ones with unclear contours were omitted. Using all carbon fibrous structures that can be taken as objects in one single field of view (approximately, 60 - 80 pieces), about 200 pieces in total were measured with three fields of views.

On the carbon fibrous structures to be measured, all places where the granular parts were mutually linked with a fine carbon fiber were found out. Then, at the respective places, the distance between the adjacent granular parts which were mutually linked with the fine carbon fiber (the length of the fine carbon fiber including the center of a granular part at one end to the center of another granular part at another end) was measured, and then the data obtained were averaged.

<Destruction test for carbon fibrous structure>

To 100ml of toluene in a lidded vial, the carbon fiber structures were added at a rate of 30 $\mu$g/ml in order to prepare the dispersion liquid sample of the carbon fibrous structure.

To the dispersion liquid sample of the carbon fibrous structure thus prepared, Ultrasound was applied using a ultrasonic cleaner (manufactured by SND Co., Ltd., Trade Name: USK-3) of which generated frequency was 38 kHz and power was 150 w, and the change of the carbon fibrous structure in the dispersion liquid was observed in the course of time aging.

First, 30 minutes after the application of ultrasound was started, a 2 ml constant volume aliquot of the dispersion sample was pipetted, and the photo of the carbon fibrous structures in the aliquot was taken with SEM. On the obtained SEM photo, 200 pieces of fine carbon fibers in the carbon fibrous structures (fine carbon fibers at least one end of which is linked to the granular part) were selected randomly, then the length of the each individual selected fine carbon fibers was measured, and mean length $D_{50}$ was calculated. The mean length calculated is taken as the initial average fiber length.

Meanwhile, on the obtained SEM photo, 200 pieces of granular parts which each were the binding point of carbon fibers in the carbon fibrous structures were selected randomly. Assuming each individual selected granular part to be a particle, contours of the individual granular parts were traced using the image analysis software, WinRoof™ (trade name, marketed by Mitani Corp.), and area within each individual contour was measured, circle-equivalent mean diameter of each individual granular part was calculated, and then, $D_{50}$ mean value thereof is calculated. The $D_{50}$ mean value calculated was taken as the initial average diameter of the granular parts.

Thereafter, according to the same procedure, a 2 ml constant volume aliquot of the dispersion sample was pipetted every constant periods, and the photo of the carbon fibrous structures in the each individual aliquot was taken with SEM, and the mean length $D_{50}$ of the fine carbon fibers in the carbon fibrous structure and the mean diameter $D_{50}$ of the granular part in the carbon fibrous structure were calculated individually.

At the time when the mean length $D_{50}$ of the fine carbon fibers comes to be about half the initial average fiber length (in the following Examples, 500 minutes after the application of ultrasound is stated. ) , the mean diameter $D_{50}$ of the granular part was compared with the initial average diameter of the granular parts in order to obtain the rate of variability (%) thereof.

<Coating ability>

According to the following criteria, this property was determined.
O: It is easy to coat by a bar coater.
x: It is difficult to coat by a bar coater.

<Total light transmittance>

Total light transmittance was determined in accordance with JIS K 7361, by using a haze/transmittance meter (HM-150, manufactured by MURAKAMI COLOR RESEARCH LABORATORY), for a coating film having a prescribed thickness formed on a glass plate (total light transmittance of 91.0%, 50 x 50 x 2 mm) .

<Volume resistivity>

50 x 50 mm of coated harden film was prepared on a glass plate. Using 4-pin probe type resistivity meters (MCP-T600, MCP-HT4500, both manufactured by Mitsubishi Chemical), the resistance ($\Omega$) at nine points of the coated film surface was measured, then the measured values are converted into those of volume resistivity ($\Omega\cdot$cm) by the resistivity meters, and then average was calculated.

<Performance of Coated film>

The performances of the formed composite paint coating are determined in the following points.

(a) Beauty (lack of hiding)

Visual observation were performed whether the primer coated film laid under the top coat can be visually recognized through the metallic color coated film as the top coat, or not, and this property was determined according to the following criteria.
O: It is difficult to recognize the hue of the primer coated film.
$\Delta$: It is relatively easy to recognize the hue of the primer coated film.
x : It is quite easy to recognize the hue of the primer coated film.

(b) Smoothness

The asperity and otherwise of the surface of the metallic color coated film were visually observed, and this property was determined according to the following criteria.
O: Good smoothness having no asperity and pinhole
$\Delta$: Slightly bad smoothness having a little asperities or pinholes
$\times$: Quite bad smoothness having a lot of asperities and pinholes

(c) Unevenness of metallic appearance

Evenness of metallic appearance of the metallic colored coated film was visually observed, and this property was determined according to the following criteria.
$\bigcirc$: Homogeneous metallic appearance without mottled metallic appearance
$\Delta$: Slightly inhomogeneous metallic appearance with a little volume of mottled metallic appearances
x: Inhomogeneous metallic appearance with a large volume of mottled metallic appearances

Synthetic Example 1

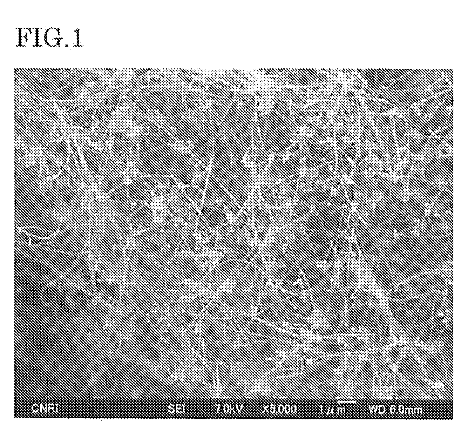

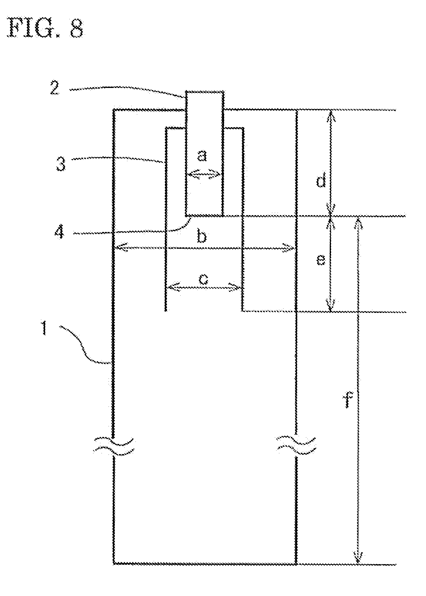

By the CVD process, carbon fibrous structures were synthesized from toluene as the raw material.
The synthesis was carried out in the presence of a mixture of ferrocene and thiophene as the catalyst, and under the reducing atmosphere of hydrogen gas. Toluene and the catalyst were heated to 380 ˚C along with the hydrogen gas, and then they were supplied to the generation furnace, and underwent thermal decomposition at 1250 ˚C in order to obtain the carbon fibrous structures (first intermediate).
The generation furnace used for the carbon fibrous structures (first intermediate) is illustrated schematically in Fig. 8. As shown in Fig. 8, the generation furnace 1 was equipped at the upper part thereof with a inlet nozzle 2 for introducing the raw material mixture gas comprising toluene, catalyst and hydrogen gas as aforementioned into the generation furnace 1. Further, at the outside of the inlet nozzle 2, a cylindrical-shaped collision member 3 was provided. The collision member 3 was set to be able to interfere in the raw material gas flow introduced from the raw material supply port 4 located at the lower end of the inlet nozzle 2. In the generation furnace 1 used in this Example, given that the inner diameter of the inlet nozzle 2, the inner diameter of the generation furnace 1, the inner diameter of the cylindrical-shaped collision member 3, the distance from the upper end of the generation furnace 1 to the raw material mixture gas supply port 4, the distance from the raw material mixture gas supply port 4 to the lower end of the collision member 3, and the distance from the raw material mixture gas supply port 4 to the lower end of the generation furnace 1 were "a", "b", "c", "d", "e", and "f", respectively, the ratio among the above dimensions was set as a:b:c:d:e:f = 1.0:3.6:1.8:3.2:2.0: 21.0. The raw material gas supplying rate to the generation furnace was 1850 NL/min., and the pressure was 1.03 atms.
The synthesized first intermediate was baked at 900˚C in nitrogen gas in order to remove hydrocarbons such as tar and to obtain a second intermediate. The R value of the second intermediate measured by the Raman spectroscopic analysis was found to be 0.98. Sample for electron microscopes was prepared by dispersing the first intermediate into toluene. Figs. 1 and 2 show SEM photo and TEM photo of the sample, respectively.

Further, the second intermediate underwent a high temperature heat treatment at 2600 ˚C. The obtained aggregates of the carbon fibrous structures underwent pulverization using an air flow pulverizer in order to produce the carbon fibrous structures to be used in the present invention.

A sample for electron microscopes was prepared by dispersing ultrasonically the obtained carbon fibrous structures into toluene. Fig. 3, and Figs. 4A and 4B show SEM photo and TEM photos of the sample, respectively.

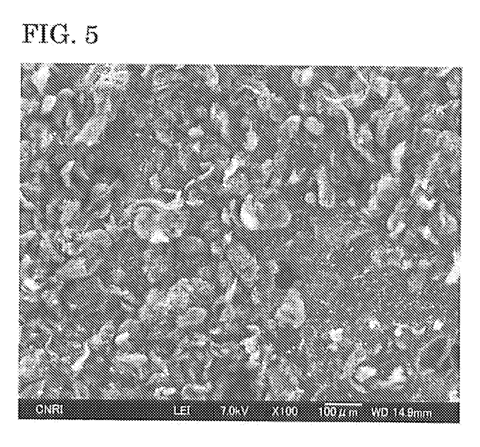

Fig. 5 shows SEM photo of the obtained carbon fibrous structures as mounted on a sample holder for electron microscope, and Table 1 shows the particle distribution of obtained carbon fibrous structures.

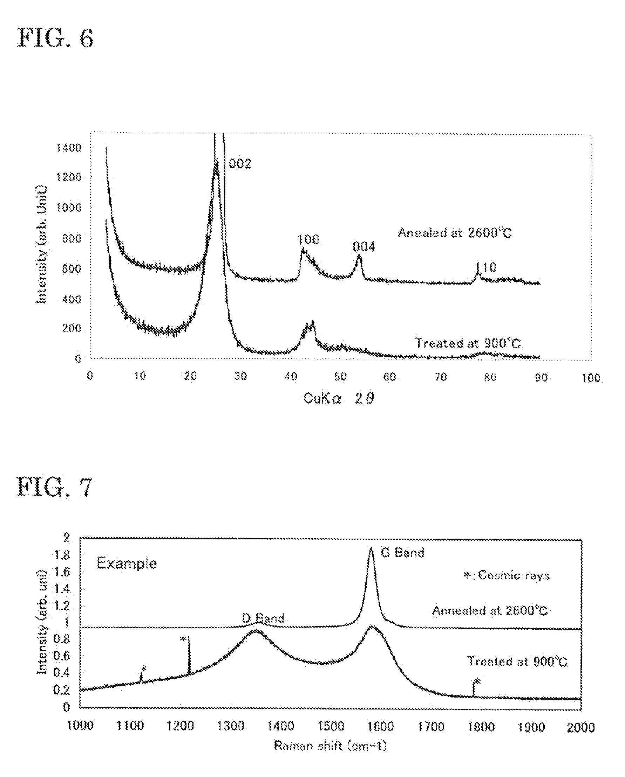

Further, X-ray diffraction analysis and Raman spectroscopic analysis were performed on the carbon fibrous structure before and after the high temperature heat treatment in order to examine changes in these analyses. The results are shown in Figs. 6 and 7, respectively.

Additionally, it was found that the carbon fibrous structures had an area based circle-equivalent mean diameter of 72.8 $\mu$m, bulk density of 0.0032 g/cm$^3$, Raman $I_D/I_G$ ratio of 0.090, TG combustion temperature of 786 ˚C, spacing of 3.383 angstrom, particle's resistance of 0.0083 $\Omega$·cm, and density after decompression of 0.25 g/cm$^3$.

The mean diameter of the granular parts in the carbon fibrous structures was determined as 443 nm (SD 207 nm), that is 7.38 times larger than the outer diameter of the carbon fibers in the carbon fibrous structure. The mean roundness of the granular parts was 0.67 (SD 0.14).

Further, when the destruction test for carbon fibrous structure was performed according to the above mentioned procedure, the initial average fiber length ($D_{50}$) determined 30 minutes after the application of ultrasound was started was found to be 12.8 $\mu$m, while the mean length $D_{50}$ determined 500 minutes after the application of ultrasound was started was found to be 6.7 $\mu$m, which value was about half the initial value. This result showed that many breakages were given in the fine carbon fibers of the carbon fibrous structure. Whereas the variability (decreasing) rate for the diameter of granular part was only 4.8%, when the mean diameter ($D_{50}$) of the granular part determined 500 minutes after the application of ultrasound was started was compared with the initial average diameter ($D_{50}$) of the granular parts determined 30 minutes after the application of ultrasound was started. Considering measurement error, etc., it was found that the granular parts themselves were hardly destroyed even under the load condition that many breakages were given in the fine carbon fibers, and the granular parts still function as the binding site for the fibers mutually.

Table 2 provides a summary of the various physical properties as determined in Synthetic Example 1.

[Table 1]

| Particle Distribution (pieces) | Synthetic Example 1 |
|---|---|
| <50 $\mu$m | 49 |
| 50 $\mu$m to <60 $\mu$m | 41 |
| 60 $\mu$m to <70 $\mu$m | 34 |
| 70 $\mu$m to <80 $\mu$m | 32 |
| 80 $\mu$m to <90 $\mu$m | 16 |
| 90 $\mu$m to <100 $\mu$m | 12 |
| 100 $\mu$m to <110 $\mu$m | 7 |
| >110 $\mu$m | 16 |
| Area based circle-equivalent mean diameter | 72.8 $\mu$m |

[Table 2]

| | Synthetic Example 1 |
|---|---|
| Area based circle-equivalent mean diameter | 72.8 $\mu$m |
| Bulk density | 0.0032g/cm$^3$ |
| $I_D/I_G$ ratio | 0.090 |
| TG combustion temperature | 786 ˚C |

(continued)

|  | Synthetic Example 1 |
| --- | --- |
| Spacing for (002) faces | 3.383 Å |
| Particle's resistance at 0.5 g/cm$^3$ | 0.0173 Ω·cm |
| Particle's resistance at 0.8 g/cm$^3$ | 0.0096 Ω·cm |
| Particle's resistance at 0.9 g/cm$^3$ | 0.0083 Ω·cm |
| Density after decompression | 0.25g/cm$^3$ |

Synthetic Example 2

By the CVD process, carbon fibrous structures were synthesized using a part of the exhaust gas from the generation furnace as a recycling gas in order to use as the carbon source the carbon compounds such as methane, etc., included in the recycling gas, as well as a fresh toluene.

The synthesis was carried out in the presence of a mixture of ferrocene and thiophene as the catalyst, and under the reducing atmosphere of hydrogen gas. Toluene and the catalyst as a fresh raw material were heated to 380˚C along with the hydrogen gas in a preheat furnace, while a part of the exhaust gas taken out from the lower end of the generation furnace was used as a recycling gas. After it was adjusted to 380 ˚C, it was mixed with the fresh raw material gas on the way of the supplying line for the fresh raw material to the generation furnace. The mixed gas was then supplied to the generation furnace.

The composition ratio in the recycling gas used were found to be $CH_4$ 7.5%, $C_6H_6$ 0.3%, $C_2H_2$ 0.7%, $C_2H_6$ 0.1%, CO 0.3%, $N_2$ 3.5%, and $H_2$ 87.6% by the volume based molar ratio. The mixing flow rate was adjusted so that the mixing molar ratio of methane and benzene in the raw material gas to be supplied to the generation furnace, $CH_4/C_6H_6$ was set to 3.44 (wherein, it was considered that the toluene in the fresh raw material gas had been decomposed at 100% to $CH_4$: $C_6H_6$ = 1:1 by the heating in the preheat furnace.

In the final raw material gas, $C_2H_2$ , $C_2H_6$, and CO which were involved in the recycling gas to be mixed were naturally included. However, since these ingredients were very small amount, theymay substantially be ignored as the carbon source.

Then they were underwent thermal decomposition at 1250 ˚C in order to obtain the carbon fibrous structures (first intermediate) in an analogous fashion as Synthetic Example 1.

The constitution of the generation furnace used for the carbon fibrous structures (first intermediate) was the same as that shown in Fig.8, except that the cylindrical- shaped collision member 3 was omitted. The rawmaterial gas supplying rate to the generation furnace was 1850 NL/min., and the pressure was 1.03 atms as in the case of Synthetic Example 1.

The synthesized first intermediate was baked at 900 ˚C in argon gas in order to remove hydrocarbons such as tar and to obtain a second intermediate. The R value of the second intermediate measured by the Raman spectroscopic analysis was found to be 0.83. Sample for electron microscopes was prepared by dispersing the first intermediate into toluene. SEM photo and TEM photo obtained for the sample are in much the same with those of Synthetic Example 1 shown in Figs. 1 and 2, respectively.

Further, the second intermediate underwent a high temperature heat treatment at 2600 ˚C in argon gas. The obtained aggregates of the carbon fibrous structures underwent pulverization using an air flow pulverizer in order to produce the carbon fibrous structures to be used in the present invention.

A sample for electron microscopes was prepared by dispersing ultrasonically the obtained carbon fibrous structures into toluene. SEM photo and TEM photos obtained for the sample are in much the same with those of Synthetic Example 1 shown in Fig. 3 and Figs.4A and 4B, respectively.

Separately, the obtained carbon fibrous structures were mounted on a sample holder for electron microscope, and observed for the particle distribution. The obtained results are shown in Table 3.

Further, X-ray diffraction analysis and Raman spectroscopic analysis were performed on the carbon fibrous structure before and after the high temperature heat treatment in order to examine changes in these analyses. The results are in much the same with those of Synthetic Example 1 shown in Figs. 6 and 7, respectively.

Additionally, it was found that the carbon fibrous structures had an area based circle-equivalent mean diameter of 75.8 μm, bulk density of 0.004 g/cm$^3$, Raman $I_D/I_G$ ratio of 0.086, TG combustion temperature of 807 ˚C, spacing of 3.386 Å, particle's resistance of 0.0077 Ω·cm, and density after decompression of 0.26 g/cm$^3$.

The mean diameter of the granular parts in the carbon fibrous structures was determined as 349.5 nm (SD 180.1 nm), that is 5.8 times larger than the outer diameter of the carbon fibers in the carbon fibrous structure. The mean roundness of the granular parts was 0.69 (SD 0.15).

Further, when the destruction test for carbon fibrous structure was performed according to the above mentioned procedure, the initial average fiber length ($D_{50}$) determined 30 minutes after the application of ultrasound was started was found to be 12.4 $\mu$m, while the mean length $D_{50}$ determined 500 minutes after the application of ultrasound was started was found to be 6.3 $\mu$m, which value was about half the initial value. This result showed that many breakages were given in the fine carbon fibers of the carbon fibrous structure. Whereas the variability (decreasing) rate for the diameter of granular part was only 4.2%, when the mean diameter ($D_{50}$) of the granular part determined 500 minutes after the application of ultrasound was started was compared with the initial average diameter ($D_{50}$) of the granular parts determined 30 minutes after the application of ultrasound was started. Considering measurement error, etc., it was found that the granular parts themselves were hardly destroyed even under the load condition that many breakages were given in the fine carbon, and the granular parts still function as the binding site for the fibers mutually.

Table 4 provides a summary of the various physical properties as determined in Synthetic Example 2.

[Table 3]

| Particle Distribution (pieces) | Synthetic Example 2 |
|---|---|
| <50 $\mu$m | 48 |
| 50 $\mu$m to <60 $\mu$m | 39 |
| 60 $\mu$m to <70 $\mu$m | 33 |
| 70 $\mu$m to <80 $\mu$m | 30 |
| 80 $\mu$m to <90 $\mu$m | 12 |
| 90 $\mu$m to <100 $\mu$m | 15 |
| 100 $\mu$m to <110 $\mu$m | 3 |
| >110 $\mu$m | 18 |
| Area based circle-equivalent mean diameter | 75.8 $\mu$m |

[Table 4]

| | Synthetic Example 2 |
|---|---|
| Area based circle-equivalent mean diameter | 75.8 $\mu$m |
| Bulk density | 0.004g/cm$^3$ |
| $I_D/I_G$ ratio | 0.086 |
| TG combustion temperature | 807 ˚C |
| Spacing for (002) faces | 3.386 Å |
| Particle's resistance at 0.5 g/cm$^3$ | 0.0161 $\Omega$·cm |
| Particle's resistance at 0.8 g/cm$^3$ | 0.0089 $\Omega$·cm |
| Particle's resistance at 0.9 g/cm$^3$ | 0.0077 $\Omega$·cm |
| Density after decompression | 0.26g/cm$^3$ |

Example 1

To 100 parts by weight of polyurethane resin solution (non-volatile moiety: 20%), 5 parts by weight of the carbon fibrous structures obtained in Synthetic Example 1 was added, and then the resultant mixture underwent dispersion treatment using a bead mill (DYNO-MILL, manufactured by SHINMARU ENTERPRISES CORPORATION). As a result, the coating composition where the carbon fibrous structures were dispersed was prepared.

The coating composition thus obtained was developed on a glass plate in order to obtain a hardened coated film of 0. 3 $\mu$m in thickness. The hardened film was tested for coating ability, total light transmittance, and volume resistivity. As results, it was found that that the coating ability was O, the total light transmittance was 70 %, and the volume resistivity was $10^4$ Ω·cm.

Example 2

Coating composition was prepared in the same fashion as in Example 1 except that the carbon fibrous structures obtained in Synthetic Example 2 were used instead of those of Synthetic Example 1, and the compound was applied to the same evaluations as in Example 1. As results, it was found that that the coating ability was O, the total light transmittance was 73 %, and the volume resistivity was 8 x $10^3$ Ω·cm.

Example 3

To 100 parts by weight of polyurethane resin solution (non-volatile moiety: 20%), 25 parts by weight of the carbon fibrous structures obtained in Synthetic Example 1 was added, and then the resultant mixture underwent dispersion treatment using a bead mill (DYNO-MILL, manufactured by SHINMARU ENTERPRISES CORPORATION). As a result, the coating composition for conductive primer where the carbon fibrous structures were dispersed was prepared.
Onto the whole surface of a polypropylene resin test piece (10 x 20 x 0. 5 cm) which had been cleaned with isopropyl alcohol in advance, the obtained coating composition was coated using air-spraying procedure so as to obtain a film thickness of 15 μm. After 3 minutes' left standing of the coated film at room temperature (25 ˚C ± 5 ˚C), using the electrostatic coating procedure and in accordance with the wet-on-wet coating procedure, a silver metallic color paint as a colored top coat was coated onto the coated film of the above coating composition, so as to obtain a film thickness of 30 μm. Incidentally, with respect to the silver metallic color paint used, its thickness necessitated for hiding substrate was 40 μm. After 3 minutes' left standing of the coated films at room temperature, the coated films underwent heating at 120 ˚C for 30 minutes in order to harden the both coated films.
The obtained coating sample was examined for the coating performance. As results, with respect to all of beauty, smoothness and unevenness of metallic appearance, the obtained coating sample was evaluated to be ○.

**Claims**

1. Conductive coating material which comprises an organic binder component and carbon fibrous structures, wherein the carbon fibrous structure comprises a three dimensional network of carbon fibers each having an outside diameter of 15 - 100 nm, wherein the carbon fibrous structure further comprises a granular part with which the carbon fibers are tied together in the state that the concerned carbon fibers are externally elongated therefrom, and wherein the granular part is produced in a growth process of the carbon fibers; and wherein the carbon fibrous structures are contained at a rate of 0.01 - 50 % by weight based on the total weight of the coating material.

2. The conductive coating material according to Claim 1, which is used for a conductive primer

3. The conductive coating material according to Claim 1, which is used for a conductive ink.

4. The conductive coating material according to one of Claims 1 - 3, wherein the carbon fibrous structures have an area-based circle-equivalent mean diameter of 50 - 100 μm.

5. The conductive coating material according to one of Claims 1 - 4, wherein the carbon fibrous structures may have a bulk density of 0.0001 - 0.05g/cm$^3$.

6. The conductive coating material according to one of Claims 1-5, wherein the carbon fibrous structures have $I_D/I_G$ ratio determined by Raman spectroscopy of not more than 0.2.

7. The conductive coating material according to one of Claims 1-6, wherein the carbon fibrous structures are produced using as carbon sources at least two carbon compounds which have mutually different decomposition temperatures.

FIG.1

FIG.2

FIG. 3

FIG. 4A

FIG. 4B

FIG. 5

FIG. 6

FIG. 7

FIG. 8

| INTERNATIONAL SEARCH REPORT | International application No. |
|---|---|
| | PCT/JP2006/321120 |

**A. CLASSIFICATION OF SUBJECT MATTER**
*C09D201/00*(2006.01)i, *B82B1/00*(2006.01)i, *C01B31/02*(2006.01)i, *C09D5/00* (2006.01)i, *C09D5/24*(2006.01)i, *C09D11/10*(2006.01)i, *D01F9/127*(2006.01)i, *H01B1/24*(2006.01)i
According to International Patent Classification (IPC) or to both national classification and IPC

**B. FIELDS SEARCHED**

Minimum documentation searched (classification system followed by classification symbols)
C09D1/00-C09D201/10, B82B1/00, C01B31/02, D01F9/127, H01B1/24

Documentation searched other than minimum documentation to the extent that such documents are included in the fields searched
Jitsuyo Shinan Koho        1922-1996   Jitsuyo Shinan Toroku Koho   1996-2007
Kokai Jitsuyo Shinan Koho   1971-2007   Toroku Jitsuyo Shinan Koho   1994-2007

Electronic data base consulted during the international search (name of data base and, where practicable, search terms used)
WPI(DIALOG), JAPICDOC(JDream2), JCATALOG(JDream2), JCHEM(JDream2), JMEDPlus(JDream2), JST7580(JDream2), JSTPlus(JDream2)

**C. DOCUMENTS CONSIDERED TO BE RELEVANT**

| Category* | Citation of document, with indication, where appropriate, of the relevant passages | Relevant to claim No. |
|---|---|---|
| X | JP 3-74465 A (Japan Synthetic Rubber Co., Ltd.), 29 March, 1991 (29.03.91), Full text; (Claims; page 5) & EP 1564277 A1         & WO 91/03057 A1 & EP 491728 A1          & US 5643990 A | 1-7 |
| X | WO 2004/048263 A1 (CARBON NANOTECHNOLOGIES, INC.), 10 June, 2004 (10.06.04), Full text; (WHAT IS CLAIMED IS:) & JP 2006-505483 A      & JP 2006-261131 A & EP 1463685 A1         & US 2004/0150312 A1 & US 2005/0002851 A1    & KR 2005072056 A | 1-7 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 January, 2007 (23.01.07) | 30 January, 2007 (30.01.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| | International application No. |
|---|---|
| | PCT/JP2006/321120 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 2002-266170 A  (Showa Denko Kabushiki Kaisha),<br>18 September, 2002 (18.09.02),<br>Full text; (Claims)<br>& WO 02/049412 A1        & EP 1343410 A1<br>& US 2004/0036060 A1     & KR 2003068561 A<br>& CN 1481454 A | 1-7 |
| X | WO 2005/095687 A1  (Bussan Nanotech Research Institute Inc.),<br>13 October, 2005 (13.10.05),<br>Full text; (Claims; Par. No. [0047])<br>& JP 2006-111515 A        & US 2006/0062715 A1<br>& JP 3761561 B1           & KR 2006038910 A | 1-7 |
| Y | JP 57-117623 A  (Showa Denko Kabushiki Kaisha),<br>22 July, 1982 (22.07.82),<br>Full text; (Claims)<br>(Family: none) | 1-7 |
| Y | JP 9-132846 A  (Showa Denko Kabushiki Kaisha),<br>20 May, 1997 (20.05.97),<br>Full text; (Claims)<br>& US 6103373 A | 1-7 |
| Y | JP 2004-176244 A  (Showa Denko Kabushiki Kaisha),<br>24 June, 2004 (24.06.04),<br>Full text; (Claims)<br>& WO 2005/123869 A1      & EP 1570119 A1<br>& US 2006/0046051 A1 | 1-7 |
| Y | JP 2003-227039 A  (Showa Denko Kabushiki Kaisha),<br>15 August, 2003 (15.08.03),<br>Full text; (Claims)<br>& WO 2003/040445 A1      & US 2004/0258606 A1 | 1-7 |
| P,X | WO 2006/025462 A1  (Bussan Nanotech Research Institute Inc.),<br>09 March, 2006 (09.03.06),<br>Full text; (Claims; Par. Nos. [0044], [0046])<br>& JP 2006-183225 A        & JP 3776111 B1<br>& KR 2006060658 A | 1-7 |
| P,X | WO 2006/025141 A1  (Bussan Nanotech Research Institute Inc.),<br>09 March, 2006 (09.03.06),<br>Full text; (Claims; Par. Nos. [0044], [0046])<br>& JP 2006-183225 A        & JP 2006-183227 A<br>& JP 3776111 B1           & US 2006/0078730 A1 | 1-7 |

Form PCT/ISA/210 (continuation of second sheet) (April 2005)

**INTERNATIONAL SEARCH REPORT**

| International application No. |
| --- |
| PCT/JP2006/321120 |

C (Continuation).   DOCUMENTS CONSIDERED TO BE RELEVANT

| Category* | Citation of document, with indication, where appropriate, of the relevant passages | Relevant to claim No. |
| --- | --- | --- |
| P,X | JP 2006-57057 A  (Bussan Nanotech Research Institute Inc.), 02 March, 2006 (02.03.06), Full text; (Claims; Par. No. [0053]) (Family: none) | 1-7 |
| P,X | JP 2006-89711 A  (Bussan Nanotech Research Institute Inc.), 06 April, 2006 (06.04.06), Full text; (Claims; Par. No. [0042]) (Family: none) | 1-7 |
| P,X | WO 2006/100809 A1  (Bussan Nanotech Research Institute Inc.), 28 September, 2006 (28.09.06), Full text; (Claims; Par. Nos. [0078], [0080]) & JP 2006-265315 A      & JP 3720044 B1 & US 2006/0216516 A1 | 1-7 |
| P,X | WO 2006/100877 A1  (Bussan Nanotech Research Institute Inc.), 28 September, 2006 (28.09.06), Full text; (Claims; Par. Nos. [0100], [0102]) & JP 2006-265751 A | 1-7 |
| E,X | WO 2006/117924 A1  (Bussan Nanotech Research Institute Inc.), 09 November, 2006 (09.11.06), Full text; (Claims) & JP 2006-310154 A | 1-7 |

Form PCT/ISA/210 (continuation of second sheet) (April 2005)

| **INTERNATIONAL SEARCH REPORT** | International application No. |
|---|---|
|  | PCT/JP2006/321120 |

 With respect to the term "a particulate part that binds up the carbon fibers" in claim 1, the specific morphology or shape of the particulate part is unclear, and the technical meaning of the expression "the particulate part is formed in the growing process of the carbon fibers" is also unclear.  Thus, claim 1 is not supported in the meaning within PCT Article 6.

 Further, those carbon fiber structures which are disclosed as a carbon fiber structure having "a particulate part" in the meaning within PCT Article 5 are limited to an extremely small part of the carbon fiber structures cited in the description, and it is also unclear what types of carbon fiber structures are additionally included within the scope of the term.  Thus, claim 1 is not supported in the meaning within PCT Article 6.

Form PCT/ISA/210 (extra sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5098771 A